# EUROPÄISCHE PATENTSCHRIFT

(11) **EP 2 576 219 B1**
(45) Veröffentlichungstag und Bekanntmachung des Hinweises auf die Patenterteilung: **04.12.2013**
(21) Anmeldenummer: 10724703.3
(22) Anmeldetag: 26.05.2010
(51) Int. Cl.: B32B 37/14, B32B 17/06, F24J 2/10

(54) **VERFAHREN ZUM HERSTELLEN EINES FLÄCHIGEN MATERIALSCHICHTVERBUNDES**
METHOD FOR PRODUCING A FLAT MATERIAL LAYER ASSEMBLY
PROCÉDÉ DE FABRICATION D'UN COMPOSITE CONSTITUÉ DE COUCHES PLANES DE MATÉRIAUX

(43) Veröffentlichungstag der Anmeldung: 10.04.2013
(73) Patentinhaber: Metawell GmbH, 86633 Neuburg an der Donau (DE)
(72) Erfinder: FÄHRROLFES, Herbert, 86697 Oberhausen (DE); SCHIEKEL, Michael, 86633 Neuburg an der Donau (DE); WESOLOWSKI, Klemens, 86633 Neuburg an der Donau (DE)
(74) Vertreter: Heim, Florian Andreas
(86) Internationale Anmeldenummer: PCT/EP2010/003193
(87) Internationale Veröffentlichungsnummer: WO 2011/147429

(56) Entgegenhaltungen:
- US-A1- 2002 185 124

## Beschreibung

Die Erfindung betrifft ein Verfahren zum Herstellen eines flächigen Materialschichtverbundes aus einem ersten flächigen Material und aus einem zweiten flächigen Material. Hierbei kann das erste flächige Material bevorzugt ein Glasmaterial aufweisen. Ferner besteht das zweite flächige Material aus einem zum ersten flächigen Material unterschiedlichen Material. Bei dem bekannten Verfahren wird das erste flächige Material mit dem zweiten flächigen Material gepaart, das heißt verbunden.

Ferner betrifft die Erfindung einen Materialschichtverbund aus einem ersten flächigen Material, insbesondere aus einem Glasmaterial, und einem zweiten flächigen Material, wobei das erste flächige Material und das zweite flächige Material gepaart sind. Außerdem weist das zweite flächige Material ein zum ersten flächigen Material unterschiedliches Material auf.

Spiegel aus Glasmaterial werden beispielsweise für Sonnenkollektoren oder in der Solar-Thermie verwendet. Sie können zum Aufbau eines Fresnel-Kollektors verwendet werden. Ein Fresnel-Kollektor weist eine Mehrzahl in Reihe angeordneter, ebener oder leicht gekrümmter Reflektorelemente oder Spiegel auf, die dazu verwendet werden, Sonnenstrahlung auf ein zentrales Absorberrohr zu fokussieren. In diesem zentralen Absorberrohr kann ein Wärmeträgermedium, beispielsweise ein spezielles Thermoöl oder auch Wasser, zirkulieren. Das Fluid wird durch die Sonnenwärme erhitzt. Die derart gewonnene thermische Energie kann beispielsweise in einem nachgeschalteten Dampfkraftprozess, insbesondere mittels Turbinen und Generator in elektrischen Strom umgewandelt werden. Es ist aber ebenso möglich, die gewonnene thermische Energie für Prozesswärme oder zur Meerwasserentsalzung zu verwenden.

Problematisch an den bekannten Reflektoren aus Spiegelglas ist die hohe Bruchgefahr. Hierbei ist insbesondere die unterschiedliche thermische Ausdehnung von Glas und der Unterkonstruktion zu berücksichtigen. Auch ist zu beachten, dass Reflektoren, wenn sie beispielsweise in der Wüste eingesetzt werden, Temperaturen von bis zu 60°C am Tag und bis zu -20°C in der Nacht ausgesetzt werden. In diesem Temperaturbereich, der beispielsweise als Einsatztemperaturbereich oder Betriebstemperaturbereich bezeichnet werden kann, darf es zu keinerlei Beschädigung der Glasschicht durch unterschiedliche thermische Ausdehnungen kommen. Grundsätzlich müssen auftretende Temperaturunterschiede zwischen Tag und Nacht oder Sonnenschein und schlechtem, kaltem Wetter wie Regen berücksichtigt werden.

Werden derartige Reflektoren, beispielsweise in den gemäßigten Breiten eingesetzt, so ist im Sommer damit zu rechnen, dass es während der Lebensdauer eines derartigen Reflektors zu Hagelschlag kommen kann. Wünschenswert wäre es, wenn derartige Umwelteinflüsse, insbesondere Hagel, den Reflektor nicht oder nur unwesentlich beschädigen würden, so dass dieser nicht ausgetauscht werden muss.

Die US 2002/0185124 A1 offenbart ein Verfahren zum Herstellen eines flächigen Materialschichtverbundes aus einem ersten flächigen Material und einem zweiten flächigen Material, wobei bei der Paarung das zweite Material auf eine Temperatur höher als die Einsatztemperatur erhitzt wird, während das erste Material auf seiner der Form zugewandten Seite auf eine Temperatur abgekühlt wird, welche Temperatur maximal auf Raumtemperatur gehalten wird.

Der Erfindung liegt die **Aufgabe** zugrunde, ein Verfahren zum Herstellen eines flächigen Materialschichtverbundes und einen flächigen Materialschichtverbund anzugeben, welcher belastungsfähig ausgebildet ist, so dass die zuvor beschriebenen Problematiken, insbesondere die hohe Glasbruchgefahr durch unterschiedliche thermische Ausdehnungen, nicht mehr oder nur in geringem Maße vorliegen.

Die Aufgabe wird erfindungsgemäß durch ein Verfahren zum Herstellen eines flächigen Materialschichtverbundes mit den Merkmalen des Anspruchs 1 gelöst.

Weitere vorteilhafte Ausführungen sind in den abhängigen Ansprüchen, der Beschreibung sowie den Figuren und deren Beschreibung angegeben.

Gemäß dem Anspruch 1 ist vorgesehen, dass für das zweite flächige Material ein Material gewählt wird, welches einen zum ersten flächigen Material unterschiedlichen Wärmeausdehnungskoeffizienten aufweist und dass die Paarung in einem Temperaturbereich durchgeführt wird, welcher außerhalb des Einsatztemperaturbereiches des flächigen Materialschichtverbundes liegt. Hierdurch wird erreicht, dass im Einsatztemperaturbereich des flächigen Materialschichtverbundes in dem ersten flächigen Material Druckspannungen auftreten.

Ein Grundgedanke der Erfindung liegt darin, dass erkannt wurde, dass ein erstes flächiges Material, welches insbesondere aus Glas bestehen kann, zwar anfällig für Zugspannung ist, jedoch Druckspannungen relativ gut aufnehmen und verkraften kann.

Um daher gezielt Druckspannungen in der ersten flächigen Materialschicht zu erzeugen, wird die Paarung zwischen der ersten flächigen Materialschicht und der zweiten flächigen Materialschicht in einem Temperaturbereich durchgeführt, welcher außerhalb des Einsatztemperaturbereiches des flächigen Materialschichtverbundes liegt. Hierdurch wird erreicht, dass, wenn der Materialschichtverbund in dem Einsatztemperaturbereich verwendet wird, bestimmte Spannungen in den beiden flächigen Materialien vorhanden sind. Diese Spannungen werden derart ausgelegt, dass das erste flächige Material unter Druckspannung liegt und das zweite flächige Material entsprechend unter Zugspannung liegt beziehungsweise diese aufweist.

Wie bereits festgestellt, ist das erste flächige Material, insbesondere wenn es sich hierbei um ein Glasmaterial handelt, stabil gegenüber Druckspannungen. Durch das gezielte Erzeugen von Druckspannungen im Einsatztemperaturbereich können von außen auf das erste flächige Material einwirkende Zugspannungen durch die im Normalfall vorliegenden Druckspannungen ausgeglichen werden. Hierdurch wird erreicht, dass im Wesentlichen keine oder nur geringe Zugspannungen in dem ersten flächigen Material auftreten können, da sie durch die vorhandenen Druckspannungen ausgeglichen beziehungsweise eliminiert werden können.

Ein weiterer Vorteil des erfindungsgemäßen Verfahrens ist, dass das erste flächige Material sehr dünn ausgebildet werden kann, da die notwendige Festigkeit durch die Druckspannung entsteht. In diesem Zusammenhang kann das erste flächige Material, beispielsweise wenn es aus Glas besteht, sehr dünn sein. Sehr dünnes Glas ist oft nicht selbsttragend, daher kann es durch ein stabiles zweites flächiges Material gestützt beziehungsweise getragen werden. Deshalb kann die Schicht aus dem zweiten flächigen Material auch als Tragkonstruktion für die Glasschicht angesehen werden.

Grundsätzlich gibt es verschiedene Möglichkeiten, die gewünschten Druckspannungen in dem ersten flächigen Material zu erzeugen. Besonders einfach ist dies möglich, wenn ein zweites flächiges Material gewählt wird, welches einen Wärmeausdehnungskoeffizienten aufweist, welcher geringer ist als der des ersten flächigen Materials, und wenn die Paarung in einem Temperaturbereich durchgeführt wird, welcher geringer als der Einsatztemperaturbereich des Materialschichtverbundes ist.

Durch eine derartige Auslegung wird erreicht, dass sich im Einsatztemperaturbereich das erste flächige Material tendenziell weiter ausdehnt als das zweite flächige Material. Da diese beiden Materialien jedoch durch die Paarung miteinander verbunden sind, entstehen so im ersten flächigen Material Druckspannungen, wohingegen im zweiten flächigen Material Zugspannungen entstehen.

In analoger Weise kann ein ähnliches Ergebnis erzielt werden, wenn für das zweite flächige Material ein Material gewählt wird, welches einen Wärmeausdehnungskoeffizienten aufweist, welcher höher ist als der des ersten flächigen Materials, und wenn die Paarung in einem Temperaturbereich durchgeführt wird, welcher höher ist als der Einsatztemperaturbereich des Materialschichtverbundes.

Wird nach der Paarung der entstandene Materialschichtverbund auf die Einsatztemperatur abgekühlt, beziehungsweise kühlt er sich ab, so entstehen wiederum Druckspannungen in dem ersten flächigen Material und Zugspannungen in dem zweiten flächigen Material. Dies ist besonders bevorzugt, wenn es sich bei dem ersten flächigen Material um ein Glasmaterial handelt, da erkannt wurde, dass Glas auf Druckspannungen relativ unempfindlich ist, wohingegen es auf Zugspannung relativ empfindlich ist.

Grundsätzlich können beliebige Materialien für das erste flächige und das zweite flächige Material gewählt werden, die zueinander unterschiedliche Wärmeausdehnungskoeffizienten aufweisen. Um ausreichend Druckspannungen in dem ersten flächigen Material zu erzeugen, hat es sich allerdings herausgestellt, dass es vorteilhaft ist, wenn der Unterschied zwischen dem Wärmeausdehnungskoeffizienten der beiden Materialien mindestens einen Faktor 2, bevorzugt mindestens einen Faktor 3 aufweist. Hierdurch kann beim Paaren und im somit entstehenden Materialschichtverbund erreicht werden, dass ausreichend hohe Druckspannungen im Einsatztemperaturbereich vorhanden sind, so dass die normalerweise durch Temperaturschwankungen oder äußere Einflüsse auf das erste flächige Material einwirkenden Zugspannungen mit einer großen Wahrscheinlichkeit durch die in diesem Material durch den Aufbau vorhandenen Druckspannungen im Wesentlichen egalisiert werden können. Somit kann es zu keinen beziehungsweise zu keinen wesentlichen Beschädigungen des ersten flächigen Materials kommen.

In einer bevorzugten Ausführungsform wird für das erste flächige Material Spiegelglas gewählt. Weiterhin ist es vorteilhaft, wenn für das zweite flächige Material ein Material ausgewählt wird, welches Aluminium aufweist. Glas weist einen Wärmeausdehnungskoeffizienten je nach exakter Ausführung des Glases zwischen 0,5 und 7,6 auf. Aluminium weist einen Wärmeausdehnungskoeffizienten, abhängig ob es sich um gewalztes oder um reines Aluminium beziehungsweise um eine Legierung handelt, im Bereich von 23 auf. Bei dem hier angegebenen Wärmeausdehnungskoeffizienten handelt es sich um Längenausdehnungskoeffizienten in 10⁻⁶ K⁻¹ bei einer Temperatur von 20°C.

Bei der Herstellung eines Materialschichtverbundes aus einem Spiegelglas als erstes flächiges Material und aus einem Aluminium aufweisenden zweiten flächigen Material hat es sich herausgestellt, dass ausreichend hohe Druckspannungen in dem Spiegelglas erzeugt werden können, so dass ein widerstandsfähiger Materialschichtverbund hergestellt werden kann.

In einer vorteilhaften Ausführungsform ist das zweite flächige Material als ein Verbundmaterial ausgeführt. Hierbei kann es sich beispielsweise um ein Verbundmaterial in Sandwichbauweise handeln. Durch die Verwendung von Verbundmaterial wird erreicht, dass der entstehende Materialschichtverbund ein geringes Gewicht aufweist. Ein hierdurch hergestelltes Reflektorelement ist somit relativ leicht, was Vorteile im Transport und in der Aufstellung sowie in der notwendigen Unterkonstruktion mit sich bringt.

Wird ein semiflexibles Sandwichmaterial für das zweite flächige Material ausgewählt, so ist es beispielsweise möglich, ein durch den Materialschichtverbund ausgebildetes Reflektorelement in einer flächigen beziehungsweise ebenen Anordnung bis zu dem Ort der endgültigen Montage zu transportieren und anschließend in eine gewünschte Geometrie, beispielsweise einen leichten Kreisradius, umzuformen.

Unter einem semiflexiblen Sandwichmaterial im Sinne der Erfindung kann beispielsweise ein Sandwichmaterial verstanden werden, welches eine hohe Biegesteifigkeit in einer ersten Ausdehnungsrichtung und eine geringe Biegesteifigkeit in einer anderen, insbesondere quer bevorzugt in einem ca. 90°-Winkel zu der ersten Ausdehnungsrichtung liegenden Ausdehnungsrichtung aufweist.

Ein semiflexibles Sandwichmaterial kann beispielsweise aus einer ersten Lage eines flachen oder ebenen Deckmaterials bestehen, auf dem eine weitere Lage aus einem periodisch gebogenen flächigen Material angeordnet ist. Das erste flächige Material wird dann mit der ersten Lage auf der der weiteren Lage abgewandten Seite verbunden.

Unter einem periodisch gebogenen flächigen Material im Sinne der Erfindung kann insbesondere eine wellen- oder faltenförmige Struktur eines flächigen Materials oder Flachmaterials verstanden werden. Die entsprechenden Wellen oder Falten können grundsätzlich eine beliebige Form haben. Bevorzugt sind jedoch im Wesentlichen sinus-, trapez-, rechteck- oder zickzackförmige Wellenformen. Die genannten Wellenformen sorgen für eine besonders gute Stabilität und Biegesteifigkeit, zumindest in eine Ausdehnungsrichtung, bei vergleichsweise geringem Materialbedarf und geringem Gewicht. Je nach Form der Wellen sind zwischen der ersten Lage und der weiteren Lage Kanäle mit einem sinus-, trapez-, rechteck- oder dreieckförmigen Querschnitt ausgebildet. Das Material der weiteren Lage kann mit dem flächigen Material der ersten Lage verbunden werden, beispielsweise verklebt werden.

In ähnlicher Weise kann auch eine Sandwichbauweise realisiert werden, wohingegen zu dem semiflexiblen Sandwichmaterial anschließend an das wellenförmige flächige Material eine weitere ebene beziehungsweise plane Schicht von Material vorgesehen wird. Die innere Schicht kann an Stelle oder zusätzlich zu dem periodisch gebogenen flächigen Material auch Schaum, eine wabenartige Struktur und/oder Honeycomb aufweisen.

Bei der Verwendung von Sandwichmaterialien für das zweite Material kann durch die hohe Festigkeit die Schicht aus dem ersten flächigen Material, insbesondere aus Glas, sehr dünn ausgeführt sein. Dies ist auch gewünscht, da Glas ein verhältnismäßig hohes Gewicht hat und sobei einem möglichst dünnen Glas das Gesamtgewicht des Materialverbundes erheblich reduziert werden kann.

Der erfindungsgemäß erzeugte Materialschichtverbund ist so, dass das erste flächige Material im Einsatztemperaturbereich des Materialschichtverbundes Druckspannungen aufweist, und dass das zweite flächige Material im Einsatztemperaturbereich des Materialschichtverbundes Zugspannungen aufweist.

Der Erfindung liegt die Erkenntnis zugrunde, dass ein erstes flächiges Material, welches insbesondere auch als Glasmaterial ausgeführt sein kann, zwar widerstandsfähig gegenüber Druckspannungen ist, jedoch anfällig gegenüber Zugspannungen. Daher liegt ein Grundgedanke der Erfindung darin, das erste flächige Material, insbesondere das Glasmaterial, derart mit dem zweiten flächigen Material zu verbinden, dass es im Einsatztemperaturbereich grundsätzlich unter Druckspannung liegt. Hierdurch wird erreicht, dass, wenn durch äußere Einwirkungen beispielsweise eine erhöhte Temperatur und unterschiedliche thermische Ausdehnungen des ersten und des zweiten flächigen Materials oder Hagelschlag, Zugspannungen auf das erste flächige Material einwirken, diese durch die im ersten flächigen Material vorhandenen Druckspannungen im Wesentlichen eliminiert werden. Das erste flächige Material wird somit im Wesentlichen keinen Zugspannungen ausgesetzt, beziehungsweise in dem ersten flächigen Material entstehen keine Zugspannungen.

Das erste flächige Material und das zweite flächige Material weisen unterschiedliche Wärmeausdehnungskoeffizienten auf. Diese können bei der Herstellung des Materialschichtverbundes zum Erzeugen der gewünschten Druck- und Zugspannungen eingesetzt werden.

Es hat sich als vorteilhaft herausgestellt, wenn sich die Ausdehnungskoeffizienten des ersten flächigen Materials und des zweiten flächigen Materials um mindestens einen Faktor 2, bevorzugt um mindestens einen Faktor 3 voneinander unterscheiden. Bei derartigen Unterschieden der Wärmeausdehnungskoeffizienten ist es möglich, die benötigten Druckspannungen in dem ersten flächigen Material zu erzeugen. Außerdem wird hierdurch erreicht, dass die Druckspannungen über den gesamten Einsatztemperaturbereich des Materialschichtverbundes in ausreichender Stärke vorhanden sind.

Besonders gut lassen sich die gewünschten Druckspannungen in dem ersten flächigen Material erzeugen, wenn das erste flächige Material als Spiegelglas ausgeführt ist und/oder das zweite flächige Material aus Aluminium besteht oder zumindest Aluminium aufweist. Spiegelglas weist, abhängig von der exakten Ausführung des Glases, einen Wärmeausdehnungskoeffizienten von 0,5 für Quarzglas bis zu 7,6 für Fensterglas auf. Aluminium weist einen Wärmeausdehnungskoeffizienten im Bereich von 23 auf. Die aufgeführten Wärmeausdehnungskoeffizienten beziehen sich auf Längenausdehnungskoeffizienten und sind in 10⁻⁶ K⁻¹ bei einer Temperatur von 20°C angegeben.

Bei der Verwendung von Spiegelglas und Aluminium sind ausreichend große Unterschiede der Wärmeausdehnungskoeffizienten vorhanden, so dass in einem Einsatztemperaturbereich des Materialschichtverbundes ausreichend hohe Druckspannung in dem Spiegelglas vorliegt.

Grundsätzlich kann das zweite flächige Material beliebig ausgeführt sein. Vorteilhaft ist es jedoch, wenn es ein Verbundmaterial ist, welches beispielsweise in einer Sandwichbauweise aufgebaut ist beziehungsweise diese aufweist. Verbundmaterialien, insbesondere in Sandwichbauweise, haben den Vorteil, dass sie bei einem relativ geringen Gewicht eine hohe Stabilität bieten. Dies ist insbesondere bei dem gewünschten Erzeugen bei Druckspannungen in dem ersten flächigen Material vorteilhaft. Auch ist ein Reflektorelement, welches aus dem Materialschichtverbund hergestellt wird, bei der Verwendung von Verbundmaterialien leicht, so dass weniger Anforderung an die Unterkonstruktion in Bezug auf Tragfähigkeit gestellt werden müssen.

Es hat sich als vorteilhaft herausgestellt, wenn das zweite flächige Material als ein semiflexibles Sandwichmaterial aufgebaut ist. Ein semiflexibles Sandwichmaterial weist eine hohe Biegesteifigkeit in eine erste Ausdehnungsrichtung und eine geringe Biegesteifigkeit in eine zweite Ausdehnungsrichtung auf. Hierbei ist die erste Ausdehnungsrichtung zur zweiten Ausdehnungsrichtung im Wesentlichen senkrecht angeordnet. Durch die Verwendung eines derartigen semiflexiblen Sandwichbauelementes wird erreicht, dass der entstehende Materialschichtverbund in eine Ausdehnungsrichtung flexibel ausgebildet ist. Hierdurch kann ein Reflektorelement, welches aus dem Materialschichtverbund hergestellt wird, gekrümmt werden, so dass er eine bessere Fokussierung der Sonnenstrahlen ermöglicht.

Vorteilhafterweise wird der Materialschichtverbund zur Herstellung eines Reflektorelements für einen Reflektor verwendet. Dieser Reflektor weist zusätzlich ein Trägerelement für das Reflektorelement auf. Ein derart aufgebauter Reflektor weist zum einen ein geringes Gewicht, zum anderen eine hohe Stabilität, insbesondere der Glasschicht, auf. Ein derartiger Reflektor ist durch die in seinem Reflektorelement vorhandenen Druckspannungen in dem ersten flächigen Material, welches bevorzugt aus Glas, insbesondere aus Spiegelglas, ausgebildet ist, auch relativ unempfindlich gegenüber Hagelschlag oder thermischen Ausdehnungen des Reflektors.

Im Sinne der Erfindung kann unter flächigem Material ein ebenes Flachmaterial verstanden werden. Auch ist es nicht zwingend erforderlich, dass das flächige Material aus nur einem Material besteht. Es können insbesondere Verbundmaterialien und/oder Materialkombinationen verwendet werden.

Die Erfindung wird nachfolgend anhand von Ausführungsbeispielen und schematischen Zeichnungen näher erläutert. In diesen Zeichnungen zeigen:
- Fig. 1: einen Querschnitt eines erfindungsgemäß erzeugten Materialschichtverbundes im Zustand der Paarung;
- Fig. 2: einen Querschnitt eines erfindungsgemäß erzeugten Materialschichtverbundes bei Einsatztemperatur ohne Paarung des ersten und des zweiten flächigen Materials;
- Fig. 3: einen Querschnitt eines erfindungsgemäß erzeugten Materialschichtverbundes bei Einsatztemperatur;
- Fig. 4: einen Querschnitt eines erfindungsgemäß erzeugten Materialschichtverbundes mit semiflexibler Sandwichstruktur;
- Fig. 5: einen Querschnitt eines erfindungsgemäß erzeugten Materialschichtverbundes mit Sandwichstruktur; und
- Fig. 6: einen Reflektor mit erfindungsgemäß erzeugten Materialschichtverbunden.

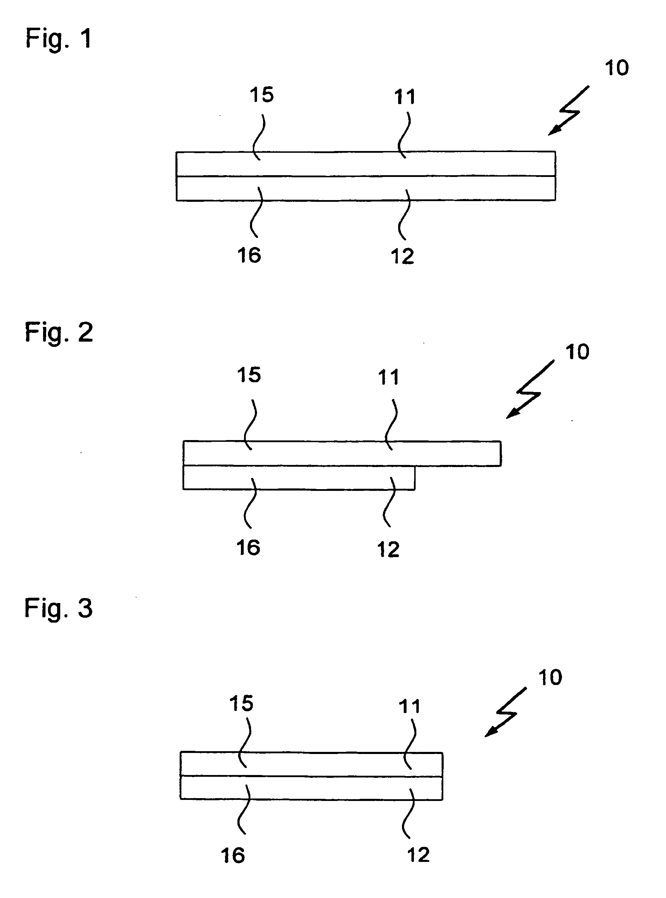

In den Figuren 1 bis 3 ist ein Materialschichtverbund 10 dargestellt. Dieser Verbund 10 weist ein erstes flächiges Material 11 und ein zweites flächigen Material 12 auf. Das erste flächige Material 11 besteht aus einem Glasmaterial 15 und das zweite flächige Material 12 besteht in dieser Ausführungsform aus einem Aluminiummaterial 16, beispielsweise einem dünnen Aluminiumblech.

Im Folgenden wird unter Bezugnahme auf die Figuren 1 bis 3 das Herstellen der gewünschten Druckspannungen in dem erfindungsgemäß erzeugten Materialschichtverbund 10 erläutert.

In Fig. 1 ist der Materialschichtverbund 10 bei einer Temperatur dargestellt, welche überhalb der Einsatztemperatur des entstehenden Materialschichtverbundes 10 liegt.

Aufgrund der thermischen Ausdehnung von Glas 15 und Aluminium 16 sind die beiden Materialschichten ausgedehnt. In diesem Zustand werden sie miteinander, beispielsweise durch Verkleben, verbunden, also gepaart.

In Fig. 2 ist der Materialschichtverbund 10 bei einer Einsatztemperatur des Materialschichtverbundes 10 dargestellt. Jedoch sind die beiden Schichten aus Glas 15 und Aluminium 16 in dieser Figur nicht miteinander verbunden. Durch die unterschiedlichen thermischen Ausdehnungskoeffizienten erfolgt eine unterschiedliche Längenänderung. Dies ist in Fig. 2 nicht maßstabsgetreu aufgezeigt.

Werden die beiden Schichten bei einer Temperatur, wie sie der Fig. 1 zugrunde liegt, gleichgroß abgemessen, so entstehen die übertrieben dargestellten Längenunterschiede, wie sie in Fig. 2 verdeutlicht sind.

In Fig. 3 ist nun der erfindungsgemäß erzeugte Materialschichtverbund 10 bei einer Einsatztemperatur dargestellt. Im Gegensatz zu Fig. 2 sind hierbei aber die beiden Schichten aus Glas 15 und Aluminium 16 miteinander verbunden. Durch das Paaren dieser beiden Schichten muss sich die Längenausdehnung beziehungsweise das Zusammenziehen der beiden Materialien ausgleichen. Hierdurch entsteht ein Material, welches länger als das Aluminium, jedoch kürzer als die Schicht aus Glas ist, wenn die beiden Schichten nicht miteinander verbunden wären.

Durch das Verbinden und die Längenausdehnung, welche nicht der natürlichen Längenausdehnung bei Einsatztemperaturen entspricht, entstehen nun in der oberen Schicht aus Glas 15 Druckspannungen, wohingegen innerhalb der unteren Schicht aus Aluminium 16 Zugspannungen entstehen.

Die Druckspannungen in der oberen Schicht aus Glas 15 sind hierbei gewünscht, um im Einsatz beziehungsweise bei der Verwendung des Materialschichtverbundes 10 auf die obere Schicht aus Glas 15 einwirkende, beispielsweise durch extreme Einwirkungen erzeugte Druckspannungen zu minimieren.

Bei der Verwendung von Glas 15 als erstes flächiges Material 11 und Aluminium 16 als zweites flächiges Material 12 findet die Paarung in einem Temperaturbereich statt, welcher oberhalb des Einsatztemperaturbereiches liegt, da Aluminium 16 einen höheren Wärmeausdehnungskoeffizienten als Glas 15 aufweist. Werden jedoch andere Materialien verwendet, bei denen das Verhältnis umgedreht ist, das heißt, das erste flächige Material einen größeren Wärmeausdehnungskoeffizienten als das zweite flächige Material aufweist, wird die Paarung in einem Temperaturbereich durchgeführt, welcher unterhalb der Einsatztemperatur des entstehenden Materialschichtverbundes 10 ist.

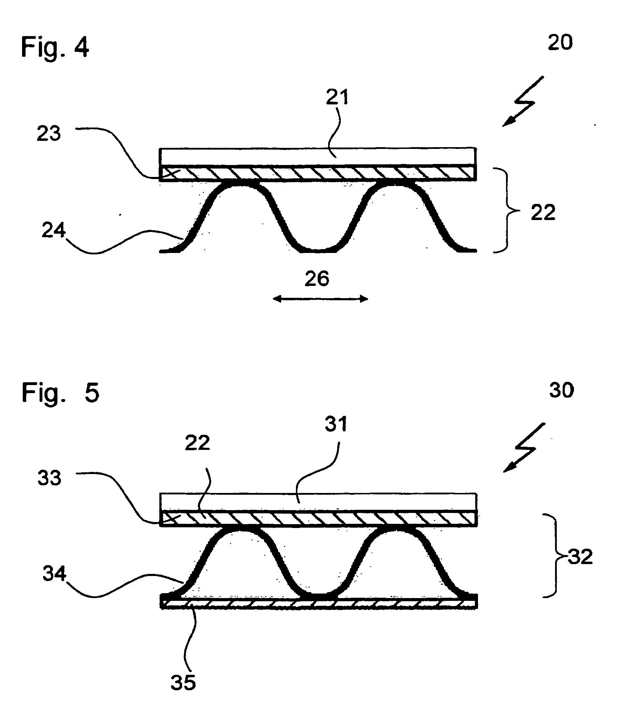

In Fig. 4 ist ein Materialschichtverbund 20 aus Glas 21 und einem semiflexiblen Sandwichmaterial 22 dargestellt. Das semiflexible Sandwichmaterial 22 weist eine Trägerschicht 23 und eine Schicht eines periodisch gebogenen Flachmaterials 24 auf. Das semiflexible Sandwichmaterial 22 wird bevorzugt zuvor gefertigt, wobei die Trägerschicht mit dem periodisch gebogenen Flachmaterial 24, beispielsweise durch Verkleben, verbunden wird. Anschließend wird in einem geeigneten Temperaturbereich die Glasschicht 21 auf die Trägerschicht 23 aufgebracht und beispielsweise miteinander verklebt. Die Glasschicht 21 kann auch durch Aufdampfen auf die Trägerschicht 23 aufgebracht werden. Grundsätzlich ist es aber auch möglich, das periodisch gebogene Flachmaterial 24 auf die Trägerschicht 23 erst aufzubringen, wenn auf der Trägerschicht 23 bereits die Glasschicht 21 aufgebracht ist. Der Materialschichtverbund 22 weist durch das semiflexible Sandwichmaterial 22 eine Biegesteifigkeit in eine Richtung auf, und ist in eine andere, im Wesentlichen senkrecht zu dieser Richtung liegende Richtung flexibel. Die flexible Richtung ist in der Zeichnung mit 26 gekennzeichnet. Die steife Richtung hierzu liegt senkrecht zur Zeichenebene.

Beispielsweise kann eine Spiegelglasschicht eine Stärke von ca. 1 mm aufweisen. Das semiflexible Sandwichmaterial kann aus einem Aluminiumblech bestehen, welches 0,8 mm dick ist und als Trägerschicht 23 fungiert. An die Trägerschicht 23 schließt sich ein dünnes Aluminiumflachmaterial an, welches zum Versteifen der Rückseite dient.

Durch eine derartige Konstruktion kann ein Materialschichtverbund 20 mit Ausmaßen von beispielsweise 1,2 m x 2,4 m erzeugt werden. Die Betriebstemperatur beziehungsweise Einsatztemperatur eines derartigen Materialschichtverbandes 20, welcher als Reflektorelement eingesetzt wird, bewegen sich im Bereich von -20°C bis +60°C. Um die gewünschten Druckspannungen in der Spiegelglasschicht 21 zu erzeugen, wird das Paaren der Glasschicht 21 mit dem semiflexiblen Sandwichmaterial 22 sowie das Verkleben und Aushärten der Verklebung bei Temperaturen von beispielsweise 80°C durchgeführt.

Grundsätzlich kann die Temperatur, bei der die Paarung erfolgt, auch von den Abmaßen des herzustellenden Materialschichtverbundes (10, 20, 30) abhängig sein, so dass die Abmaße berücksichtigt werden können.

In Fig. 5 ist ein Querschnitt eines erfindungsgemäß erzeugten Materialschichtverbundes 30 dargestellt, welcher wiederum eine Schicht aus Glas 31 und eine Schicht aus einem Sandwichmaterial 32 aufweist. Das Sandwichmaterial 32 bildet hierbei das zweite flächige Material, wohingegen die Glasschicht 31 die erste flächige Materialschicht ausbildet.

Das Sandwichmaterial 32 besteht aus einer Trägerschicht 33, einer weiteren zweiten Trägerschicht 35 und einer zwischen den beiden Trägerschichten 33, 35 angeordneten periodisch gewellten Schicht 34 aus flächigem Material. Ein derart ausgebildetes Sandwichmaterial 32 weist eine hohe Festigkeit bei geringem Gewicht auf. Dies ist insbesondere vorteilhaft, wenn der daraus ausgebildete Materialschichtverbund 30 als Reflektorelement eingesetzt wird. So weist das entstehende Reflektorelement ein geringeres Gewicht bei hoher Festigkeit auf, wodurch eine Tragkonstruktion weniger stabil ausgelegt sein muss. Auch ist es möglich, einen mit einem derartigen Materialschichtverbund aufgebauten Reflektor, beispielsweise auf Dächern, zu montieren, da er ein geringeres Gewicht aufweist als massiv ausgebildete Reflektoren.

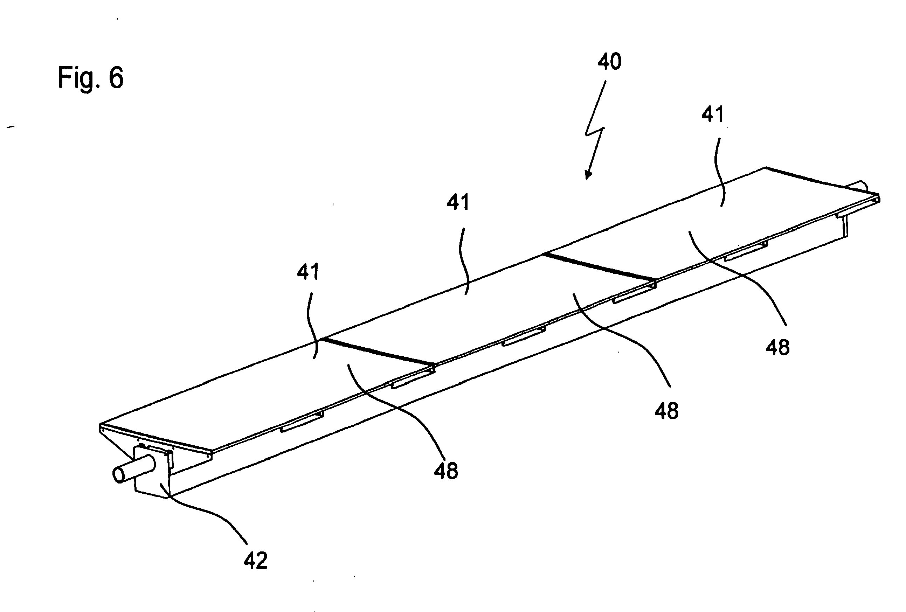

In Fig. 6 ist exemplarisch ein Fresnel-Reflektor 40 dargestellt. Dieser Reflektor 40 ist aus drei Reflektorelementen 41 aufgebaut, die jeweils aus einem erfindungsgemäß erzeugten Materialschichtverbund 48 bestehen. Die einzelnen Reflektorelemente 41 werden durch ein Trägerelement 42 gehalten. Durch den ausgeführten Aufbau des Reflektorelementes 41 als Materialschichtverbund 48 ist ein solcher Reflektor 40 sehr leicht und auf Grund des geringen Gewichtes für Aufdachanlagen geeignet.

Mit dem erfindungsgemäßen Verfahren ist es somit möglich, einen flächigen Materialschichtverbund herzustellen, der bei der Verwendung von Glas die Glasbruchgefahr verringert.

## Patentansprüche

1. Verfahren zum Herstellen eines flächigen Materialschichtverbundes (10, 20, 30) aus
- einem ersten flächigen Material (11), insbesondere aus einem Glasmaterial (15), und
- einem zweiten flächigen Material (12), aus einem zu dem ersten flächigen Material (11) unterschiedlichen Material,
wobei das erste flächige Material (11) mit dem zweiten flächigen Material (12) gepaart wird,
wobei für das zweite flächige Material (12) ein Material gewählt wird, welches einen zum ersten Material (11) unterschiedlichen Wärmeausdehnungskoeffizienten aufweist,
wobei die Paarung in einem Temperaturbereich durchgeführt wird, welcher außerhalb des Einsatztemperaturbereiches des flächigen Materialschichtverbundes (10, 20, 30) liegt, um im Einsatztemperaturbereich des flächigen Materialschichtverbundes (10, 20, 30) in dem ersten flächigen Material (11) Druckspannungen zu erzeugen
wobei als zweites flächiges Material (12) ein Material gewählt wird, welches einen Wärmeausdehnungskoeffizienten aufweist, welcher größer ist als der des ersten flächigen Materials (11),
**dadurch gekennzeichnet,**
**dass** die Paarung in einem Temperaturbereich durchgeführt wird, welcher höher ist als der Einsatztemperaturbereich des Materialschichtverbundes (10, 20, 30).

2. Verfahren nach Anspruch 1,
**dadurch gekennzeichnet,**
**dass** für das erste flächige Material (11) und das zweite flächige Material (12) Materialien gewählt werden, welche einen unterschiedlichen Wärmeausdehnungskoeffizienten mit mindestens einem Unterschied von einem Faktor 2, bevorzugt mindestens einem Faktor 3, zueinander aufweisen.

3. Verfahren nach Anspruch 1 oder 2,
**dadurch gekennzeichnet,**
**dass** als erstes flächiges Material (11) Spiegelglas gewählt wird.

4. Verfahren nach einem der Ansprüche 1 bis 3,
**dadurch gekennzeichnet,**
**dass** als zweites flächiges Material (12) ein Material aus Aluminium ausgewählt wird.

5. Verfahren nach einem der Ansprüche 1 bis 4,
**dadurch gekennzeichnet,**
**dass** als zweites flächiges Material (12) ein Verbundmaterial, insbesondere ein Verbundmaterial in Sandwichbauweise (22, 32), vorzugsweise aus Aluminium, gewählt wird.

6. Verfahren nach einem der Ansprüche 1 bis 5,
**dadurch gekennzeichnet,**
**dass** als zweites flächiges Material (12) ein semiflexibles Sandwichmaterial (22), vorzugsweise aus Aluminium, gewählt wird.

## Claims

1. Method for producing a flat material layer composite (10, 20, 30) comprising:
- a first flat material (11), in particular of a glass material (15), and
- a second flat material (12), of a different material from the first flat material (11),
wherein the first flat material (11) is paired with the second flat material (12), wherein a material is selected for the second flat material (12) which has a different thermal expansion coefficient from the first material (11),
wherein the pairing is carried out in a temperature range which lies outside of the usage temperature range of the flat material layer composite (10, 20, 30) in order to produce compressive stresses in the usage temperature range of the flat material layer composite (10, 20, 30) in the first flat material (11),
wherein as a second flat material (12) a material is selected which has a thermal expansion coefficient which is greater than that of the first flat material (11),
**characterised in that**
the pairing is carried out in a temperature range which is higher than the usage temperature range of the material layer composite (10, 20, 30).

2. Method according to claim 1,
**characterised in that**
materials are selected for the first flat material (11) and the second flat material (12) which have a different thermal expansion coefficient with at least a difference of a factor of 2, preferably at least a factor of 3, from each other.

3. Method according to claim 1 or 2,
**characterised in that**
mirror glass is selected as the first flat material (11).

4. Method according to one of the claims 1 to 3,
**characterised in that**
a material made of aluminium is selected as the second flat material (12).

5. Method according to one of the claims 1 to 4,
**characterised in that**
a composite material, in particular a composite material in sandwich construction (22, 32), preferably of aluminium, is selected as the second flat material (12).

6. Method according to one of the claims 1 to 5,
**characterised in that**
a semi-flexible sandwich material (22), preferably of aluminium, is selected as the second flat material (12).

## Revendications

1. Procédé de fabrication d'un composite constitué de couches planes de matériaux (10, 20, 30) en :
- un premier matériau plan (11), de préférence en un matériau de verre (15), et
- un deuxième matériau plan (12), en un matériau différent du premier matériau plan (11),
dans lequel le premier matériau plan (11) est apparié avec le deuxième matériau plan (12),
dans lequel on choisit pour le deuxième matériau plan (12) un matériau qui possède un coefficient de dilatation thermique différent de celui du premier matériau (11),
dans lequel l'appariement est mis en oeuvre dans une plage de températures qui est en dehors de la plage des températures d'utilisation du composite constitué de couches planes de matériaux (10, 20, 30), afin de produire dans la plage des températures d'utilisation du composite constitué de couches planes de matériaux (10, 20, 30) des contraintes de compression dans le premier matériau plan (11),
dans lequel on choisit comme deuxième matériau plan (12) un matériau qui possède un coefficient de dilatation thermique supérieur à celui du premier matériau (11),
**caractérisé :**
**en ce que** l'appariement est mis en oeuvre dans une plage de températures qui est plus élevée que la plage des températures d'utilisation du composite constitué de couches planes de matériaux (10, 20, 30).

2. Procédé selon la revendication 1,
**caractérisé :**
**en ce qu'**on choisit pour le premier matériau plan (11) et pour le deuxième matériau plan (12) des matériaux qui possèdent l'un par rapport à l'autre un coefficient de dilatation thermique différent, présentant une différence d'au moins un facteur 2, de préférence d'au moins un facteur 3.

3. Procédé selon la revendication 1 ou 2,
**caractérisé :**
**en ce que**, comme premier matériau plan (11), on choisit un matériau à base de verre.

4. Procédé selon une des revendications 1 à 3,
**caractérisé :**
**en ce que**, comme deuxième matériau plan (12), on choisit un matériau à base d'aluminium.

5. Procédé selon une des revendications 1 à 4,
**caractérisé :**
**en ce que**, comme deuxième matériau plan (12), on choisit un matériau composite, de préférence un matériau composite selon une disposition en sandwich (22, 32), de préférence à base d'aluminium.

6. Procédé selon une des revendications 1 à 5,
**caractérisé :**
**en ce que**, comme deuxième matériau plan (12), on choisit un matériau semi-flexible à disposition en sandwich (22), de préférence à base d'aluminium.
